# EUROPÄISCHE PATENTSCHRIFT

(11) **EP 2 871 037 B1**
(45) Veröffentlichungstag und Bekanntmachung des Hinweises auf die Patenterteilung: **18.04.2018**
(21) Anmeldenummer: 14191128.9
(22) Anmeldetag: 30.10.2014
(51) Int. Cl.: B29C 49/42, B29C 49/78

(54) **Umformvorrichtung zum Umformen von Kunststoffvorformlingen zu Kunststoffbehältnissen**
Forming device for forming plastic preforms into plastic containers
Dispositif de transformation d'ébauches en matière plastique en récipients en matière plastique

(30) Priorität: 30.10.2013 DE 102013111950
(43) Veröffentlichungstag der Anmeldung: 13.05.2015
(60) Teilanmeldung: 18160876.1
(73) Patentinhaber: Krones AG, 93073 Neutraubling (DE)
(72) Erfinder: Finger, Dieter, 93073 Neutraubling (DE); Handschuh, Eduard, 93073 Neutraubling (DE); Geltinger, Florian, 93073 Neutraubling (DE); Voth, Klaus, 93073 Neutraubling (DE)
(74) Vertreter: Bittner, Bernhard

(56) Entgegenhaltungen:
- EP-A1- 2 474 763
- EP-A1- 2 669 070
- WO-A1-2006/108382

## Beschreibung

Die Erfindung betrifft eine Umformvorrichtung zum Umformen von Kunststoffvorformlingen zu Kunststoffbehältnissen mit einer Vielzahl an Blasstationen und mit wenigstens einer Steuereinrichtung zum Steuern von Blasdrücken und/oder Volumenströmen an den Blasstationen, bei welcher die wenigstens eine Steuereinrichtung mindestens ein Steuerventil mit einem in einem Zylinderteil geführten Steuerkolbenteil umfasst, mittels welchem ein Blasluftkanalquerschnitt eines Blasluftkanals verschließbar ist.

Eine solche gattungsgemäße Umformvorrichtung ist beispielsweise aus der Offenlegungsschrift DE 10 2010 052 903 A1 bekannt, bei welcher eine Steuereinrichtung zur Steuerung eines Blasdrucks vorgesehen ist, die einen in einem Zylinder geführten Steuerkolben aufweist. Der Steuerkolben kann mittels eines pneumatischen Steuerdrucks in Richtung seiner Kolbenlängsachse verschoben werden, um einen Hauptströmungsweg zum Strömen von Blasluft insbesondere zu verschließen.

Aus der Patentschrift EP 1 271 029 B1 ist ebenfalls eine gattungsgemäße Umformvorrichtung mit auf einem rotierenden Blasrad angeordneten Blasstationen zur Blasformung von Behältern aus einem thermoplastischen Material bekannt. Diese Umformvorrichtung umfasst des Weiteren eine Einrichtung zur pneumatischen Steuerung eines Blasdrucks, wobei die Einrichtung einen in einem Zylinder geführten Steuerkolben aufweist, der mittels eines pneumatischen Steuerdrucks derart in Richtung der Kolbenlängsachse verlagert werden kann, dass ein Hauptströmungsweg zum Leiten von Blasluft insbesondere verschließbar ist.

Nachteilig bei solchen bekannten Umformvorrichtungen ist es, dass eine Lageveränderung des jeweiligen Steuerkolbens zum Verschließen, aber auch zum Öffnen, eines Hauptströmungsweges zum Zuführen einer Blasdruckluft meist nur relativ undifferenziert erfolgt. Insbesondere ergibt sich konstruktionsbedingt oftmals eine unbefriedigende Streuung der Ventilschaltzeiten von bis zu +/- 2 ms, wodurch auch die Qualität des eigentlichen Umformprozesses negativ beeinträchtigt werden kann.

Die WO 2006/108382 A1 zeigt ein Verfahren und Vorrichtung zur Blasformung von Behältern unter Verwendung eines beweglich geführten Ventilträgers.

Die EP 2 474 763 A1 zeigt ein Blasventil zum Verändern einer Funktionsgasdurchflussmenge in einem Funktionsgaskommunikationsweg.

Die EP 2 669 070 A1 zeigt eine Hohlkörperherstellungsmaschine umfassend mindestens eine Form, innerhalb derer Hohlkörper mittels Beaufschlagung durch ein unter Druck stehendes Medium herstellbar sind.

Es ist Aufgabe der Erfindung an gattungsgemäßen Umformvorrichtungen zumindest den vorstehend genannten Nachteil zu überwinden.

Die Aufgabe der Erfindung wird von einer Umformvorrichtung zum Umformen von Kunststoffvorformlingen zu Kunststoffbehältnissen mit einer Vielzahl an Blasstationen und mit wenigstens einer Steuereinrichtung zum Steuern von Blasdrücken und/oder Volumenströmen an den Blasstationen gemäss unabhängigem Anspruch 1 gelöst. Vorteilhafte Ausgestaltungen sind Gegenstand der abhängigen Ansprüche. Erfindungsgemäß weist die Steuereinrichtung eine elektromagnetisch arbeitende Antriebseinheit auf, wodurch ein wesentlich sensibleres Ansprechverhalten und insbesondere auch eine wesentlich reduzierte Reaktionszeit hinsichtlich der Lageveränderung des Steuerkolbenteils, welcher zumindest teilweise innerhalb eines Zylinderfußteils des Zylinderteils angeordnet ist, erzielt werden.

Es versteht sich, dass diesbezügliche Effekte auch mittels modifizierter Steuerluft gesteuerter Steuerventile erzielt werden könnten. Jedoch erfordern derartige pneumatisch gesteuerte Steuerventile noch immer einen relativ hohen Steuerluftverbrauch. Vorliegend kann jedoch auf den Einsatz einer derartigen Steuerluft zur Gänze verzichtet werden, wodurch auch ein entsprechendes Steuerluftleitungssystem nicht vorgesehen werden muss.

Vorteilhafterweise kann mittels der vorliegenden Steuereinrichtung zusätzlich auch eine stufenlos einstellbare Lageveränderung erzielt werden, wodurch Blasdrücke noch differenzierter an der erfindungsgemäßen Umformvorrichtung erzeugt werden können. Insofern kann auch auf ein ansonsten erforderliches Drosselventil verzichtet werden, mittels welchem herkömmlicherweise die Blasdruckluft zusätzlich noch gedrosselt wurde.

Deshalb umfasst die vorliegende Steuereinrichtung nicht nur ein einfaches Steuerventil, sondern sogleich ein mit einer elektromagnetisch arbeitenden Antriebeinheit ausgestattetes Drosselventil zum Steuern von Blasdrücken und/oder Volumenströmen.

Bisher kann mit einem herkömmlichen pneumatisch betätigbaren Steuerventil der Blasdruckkanal lediglich vollständig druckdicht verschlossen oder mithilfe des eigentlichen Blasdrucks der Blasdruckluft wieder geöffnet werden. Es gibt bei einem pneumatisch betätigbaren Steuerventil nur zwei Lagepositionen.

Mit der elektromagnetisch arbeitenden Antriebeinheit ist es jedoch möglich, dass der Steuerkolben sowohl in eine erste Richtung (Verschließrichtung) als auch in eine der ersten Richtung entgegengesetzten Richtung (Öffenrichtung) aktiv verlagert werden kann, ohne zur Hilfenahme der eigentlichen Blasdruckluft. Hierdurch kann die gesamte Steuereinrichtung wesentlich einfacher konstruiert werden.

Ferner kann vorliegend außerdem eine Hubweglänge des Steuerkolbenteils sehr variabel eingestellt werden. An herkömmlichen Umformvorrichtungen kann die Hubweglänge des Steuerkolbenteils nur mithilfe eines zusätzlichen mechanisch einstellbaren Kolbenanschlags reguliert werden, da das entsprechende Steuerkolbenteil pneumatisch nur zwischen zwei Schaltstellungen bewegt werden kann, nämlich "Auf" und "Zu". Es versteht sich, dass ein derartiger Kolbenanschlag den konstruktiven Aufbau des Steuerventils negativ beeinträchtigt.

Insofern ist es vorteilhaft, wenn die elektromagnetisch arbeitende Antriebeinheit gegenüber dem Steuerkolbenteil derart angeordnet ist, dass eine durch diese elektromagnetisch arbeitende Antriebeinheit eine variable Hubweglänge des Steuerkolbenteils erzeugbar ist.

Erfindungsgemäß ist vorgesehen, dass die elektromagnetisch arbeitende Antriebeinheit eine Mess- und Detektiereinheit umfasst, mittels welcher die Lageposition des Steuerkolbenteils und/oder die Lageveränderung des Steuerkolbenteils ermittelbar sind.

Beispielsweise kann die elektromagnetisch arbeitende Antriebeinheit ein Weggebermesselement der Mess- und Detektiereinheit zur Positionsbestimmung des Steuerkolbenteils hinsichtlich der axialen Verlagerungsachse umfassen, so dass entsprechende Informationen an die Steuereinrichtung weitergeleitet dort ausgewertet und verarbeitet werden können.

Insbesondere können hierdurch die Blasdrücke und/oder Volumenströme an den einzelnen Blasstationen noch differenzierter erzeugt werden. Somit ist es vorteilhaft, dass die Mess- und Detektiereinheit vorgesehen ist, mittels welcher die Lageposition des Steuerkolbenteils und/oder die Lageveränderung des Steuerkolbenteils ermittelbar sind.

Vorzugsweise erfolgt eine Steuerung kombiniert über Kraft und Weg. In diesem Zusammenhang ist es vorteilhaft, wenn ein Kraft- Wegverlauf ermittelt, aufgezeichnet, visualisiert und analysiert werden kann. Insofern ist es vorteilhaft, wenn die Mess- und Detektiereinheit zusätzlich noch über ein Kraftgebermesselement verfügt.

Umfasst das Steuerkolbenteil ein Rohrkolbenelement, welches insbesondere innerhalb eines Statorwicklungteils der elektromagnetisch arbeitenden Antriebeinheit axial verschieblich gelagert angeordnet ist, kann die Steuereinrichtung noch kompakter gebaut werden.

Zudem können die am Steuerkolbenteil zu beschleunigenden Massen durch das Rohrkolbenelement vorteilhaft reduziert werden. Hierdurch können noch schnellere Reaktionszeiten erzielt werden. Ferner können durch den Einsatz des Rohrkolbenelements die erforderlichen Antriebskräfte signifikant reduziert werden, wodurch nicht nur die elektromagnetisch arbeitende Antriebeinheit sondern die gesamte Steuereinrichtung entsprechend klein ausgebildet sein kann.

Die Antriebskräfte können noch weiter reduziert werden, wenn eine axiale Verlagerung des Steuerkolbenteils mittels eines Fluids unterstützt wird. Hierdurch erhöht sich jedoch wieder der konstruktive Aufwand.

Im Prinzip sind im Zusammenhang mit der elektromagnetisch arbeitenden Antriebeinheit mindestens folgende Antriebsvariationen vorteilhaft einsetzbar, nämlich einen rein elektrisch arbeitenden Antrieb, einen elektrisch-pneumatisch arbeitenden Antrieb, einen elektrisch arbeitenden Antrieb mit mechanischer oder pneumatischer Übersetzung. Insbesondere bei letzterer Antriebsvariation kann vorteilhaft noch ein mechanisches Übertragungselement zwischen dem Steuerkolbenteil und der elektromagnetisch arbeitenden Antriebeinheit zwischen geschaltet sein.

Auch können die Antriebskräfte durch eine zweckmäßige Wahl der miteinander direkt in Kontakt kommenden Materialien bezüglich Führungsbereiche zwischen Zylinderteil und Steuerkolbenteil reduziert werden. Als besonders vorteilhaft können Materialpaarungen angesehen werden, bei welchen das Kolbensteuerteil zumindest bereichsweise aus Metall und das Zylinderteil entsprechend aus Kunststoff, oder umgekehrt, bestehen.

Das Statorwicklungsteil ist vorliegend in dem Zylinderteil derart integriert, dass das Steuerkolbenteil bzw. dessen Läuferwicklungsteil von dem Statorwicklungsteil entlang einer axialen Verlagerungsachse zumindest teilweise radial umschlossen ist.

Darüber hinaus ist es vorteilhaft, wenn das Rohrkolbenelement ein Läuferwicklungsteil umfasst, welches die Mantelfläche des Steuerkolbenteils zumindest teilweise ausgestaltet.

Beispielsweise ist ein Spulenbereich des Läuferwicklungsteils radial außen auf der Umfangsfläche des Rohrkolbenelements aufgebracht. Hierbei steht das Läuferwicklungsteil radial über diese Umfangsfläche des Rohrkolbenelements über.

Bei einer anderen Anordnung kann der Spulenbereich des Läuferwicklungsteils in die Wandstärke des Rohrkolbenelements eingelassen sein, so dass das Läuferwicklungsteil radial bündig mit dem Rohrkolbenelement abschließt, wodurch der Durchmesser des Steuerkolbenteils durch das Läuferwicklungsteil nicht zusätzlich vergrößert ist.

Bei einer anderen vorteilhaften Anordnung umfasst das Läuferwicklungsteil alternativ ein oder mehrere Permanentmagnetelemente, welche beispielsweise im Inneren des Rohrkolbenelements angeordnet sind.

Es reicht bereits für ein gutes Zusammenwirken mit dem Statorwicklungsteil aus, wenn das Läuferwicklungsteil sich zumindest teilweise über die Längsstreckung des Steuerkolbenteils erstreckt.

Baulich besonders einfach kann das mit einem entsprechenden Läuferwicklungsteil ausgerüstete Steuerkolbenteil umgesetzt werden, wenn das Läuferwicklungsteil an sich das Rohrkolbenelement ausgestaltet. Hierdurch können auch Montagefehler vermieden werden, da das Steuerkolbenteil symmetrisch ausgestaltet ist.

Das Steuerkolbenteil kann sehr präzise entlang seiner Axialschiebeachse gelagert werden, wenn das Steuerkolbenteil an einem in ein Rohrkolbenelement hineinkragenden Führungsbolzenteil des Zylinderteils axial verschieblich gelagert ist.

Das Führungsbolzenteil weist vorzugsweise keine zusätzliche Bohrung oder dergleichen auf, um eine optimale Blasluftführung gewährleisten zu können.

Antriebskräfte können weiter gut reduziert werden, wenn das Steuerkolbenteil eine Druckausgleichskammer aufweist. Eine solche Druckausgleichskammer kann konstruktiv besonders einfach durch ein Rohrkolbenelement realisiert sein.

Die Steuereinrichtung kann konstruktiv einfach insbesondere mit einem 3/2-Wege-Steuerventil ausgerüstet werden, wenn das Steuerkolbenteil zwei Rohrkolbenelemente umfasst, wobei eines der beiden Rohrkolbenelemente axial verschieblich in dem anderen der beiden Rohrkolbenelemente angeordnet ist.

Antriebskräfte können weiter reduziert werden, wenn gegenüber Kolbenteile dichtend wirkende Dichtflächen aus einem weicheren oder härteren Werkstoff als die Kolbenteile ausgeführt sind.

Eine weitere Vereinfachung kann erzielt werden, wenn mittels der Steuereinrichtung mehrere Steuerventile zumindest einer der Blasstationen steuerbar sind.

Eine weiterführende Ausführungsvariante sieht eine zentrale Controllereinheit vor, mittels welcher mehrere Steuereinrichtungen steuerbar sind. Durch diese zentrale Controllereinheit können die einzelnen Steuereinrichtungen kollektiv verwaltet und angesprochen werden, wodurch Blasdrücke an unterschiedlichen Blasstationen gleichmäßiger erzeugt werden können.

Vorteilhafterweise können mithilfe der Steuereinrichtung bzw. der zentralen Controllereinheit auch Referenzfahrten der Steuerkolbenteile durchgeführt werden, um zumindest einen Endanschlag an dem jeweiligen Steuerventil zu kalibrieren.

Idealerweise kann mittels der vorteilhaften zentralen Controllereinheit auch ein Datenaustausch bezüglich einer Reckstangensteuerung der Umformvorrichtung und der vorliegenden Steuereinrichtung stattfinden, so dass die Betätigung der Reckstange und die Erzeugung des Blasdrucks besonders gut aufeinander abgestimmt werden können.

Es versteht sich, dass die elektromagnetisch arbeitende Antriebeinheit an ein bestehendes Energieversorgungsnetz angeschlossen werden kann. Darüber hinaus kann ein autarker Betrieb zumindest zeitweise sicher gewährleistet werden, wenn die Steuereinrichtung einen Energiespeicher zum Speichern von elektrischer Energie umfasst. Insbesondere kann hierdurch sichergestellt werden, dass das jeweilige Steuerventil bei einem Spannungsausfall noch sicher schließen kann, wodurch die jeweilige Blasstation in einen Notfallmodus wechseln kann.

Eine entsprechende elektrische Energieversorgung kann an der Umformvorrichtung vorteilhafterweise mit einer Spannung zwischen 12 V und 80 V erfolgen.

Des Weiteren ist es vorteilhaft, wenn eine Lageveränderung des Steuerkolbenteils zumindest teilweise regenerativ erfolgt.

Eine weitere vorteilhafte Ausführungsvariante sieht vor, dass die Blasstationen an einem Blasrad angeordnet sind und die Ventilsteuerung an dem sich drehenden Blasrad erfolgt. Mit anderen Worten die Steuereinrichtung steuert die Blasdrücke an den Blasstationen mittels des vorliegenden Steuerventils während die Blasstationen mit dem Blasrad um eine Blasraddrehachse rotieren.

Weitere Vorteile, Ziele und Eigenschaften vorliegender Erfindung werden anhand anliegender Zeichnung und nachfolgender Beschreibung erläutert, in welchen beispielhaft eine erfindungsgemäße Umformvorrichtung im Zusammenhang mit unterschiedlich ausgestalteten

Steuereinrichtungen und deren Bauteilkomponenten dargestellt und beschrieben ist. In der Zeichnung zeigen:
- Figur 1: schematisch eine Ansicht einer Anlage zum Herstellen von Kunststoffbehältnissen umfassend eine in einem Reinraum angeordnete Umformvorrichtung mit einer eine elektromagnetisch arbeitende Antriebeinheit aufweisenden Steuereinrichtung, um eine stufenlose Lageveränderung eines Steuerkolbenteils innerhalb eines Zylinderteils eines Blasdrucksteuerventils zu steuern;
- Figur 2: schematisch eine Detailansicht einer der Blasstationen der Umformvorrichtung aus der Figur 1;
- Figur 3A: schematisch eine Längsschnittansicht eines geschlossen ersten Blasdrucksteuerventils;
- Figur 3B: schematisch eine weitere Längsschnittansicht des geöffneten ersten Blasdrucksteuerventils aus der Figur 3A;
- Figur 4A: schematisch eine Längsschnittansicht eines geschlossen weiteren Blasdrucksteuerventils;
- Figur 4B: schematisch eine weitere Längsschnittansicht des geöffneten weiteren Blasdrucksteuerventils aus der Figur 4A;
- Figur 5: schematisch eine Längsschnittansicht eines anderen Blasdrucksteuerventils als 3/2-Wege-Steuerventil;
- Figur 6: schematisch eine Ansicht unterschiedlicher Anordnungen zwischen einer Reckstange und Blasdrucksteuerventilen;
- Figur 7A: schematisch eine Ansicht einer ersten Läuferwicklungsteilanordnung an einem Rohrkolbenelement eines Steuerkolbenteils;
- Figur 7B: schematisch eine Ansicht einer zweiten Läuferwicklungsteilanordnung an einem Rohrkolbenelement eines Steuerkolbenteils;
- Figur 7C: schematisch eine Ansicht einer weiteren Läuferwicklungsteilanordnung an einem Rohrkolbenelement eines Steuerkolbenteils;
- Figur 8A: schematisch eine Ansicht eines ersten Führungsbolzenteils mit einer planen Kopfseite;
- Figur 8B: schematisch eine Ansicht eines weiteren Führungsbolzenteils mit einer konturierten Kopfseite;
- Figur 9: schematisch eine Teilansicht der in den Figuren 3 gezeigten Steuereinrichtung;
- Figur 10A: schematisch eine Ansicht einer alternativen Anordnung mit einer nicht in einem Reinraum angeordneten Umformvorrichtung mit einer eine elektromagnetisch arbeitende Antriebeinheit aufweisenden Steuereinrichtung, um eine stufenlose Lageveränderung eines Steuerkolbenteils innerhalb eines Zylinderteils eines Blasdrucksteuerventils zu steuern; und
- Figur 10B: schematisch eine Detailansicht einer der Blasstationen der Umformvorrichtung aus der Figur 10A.

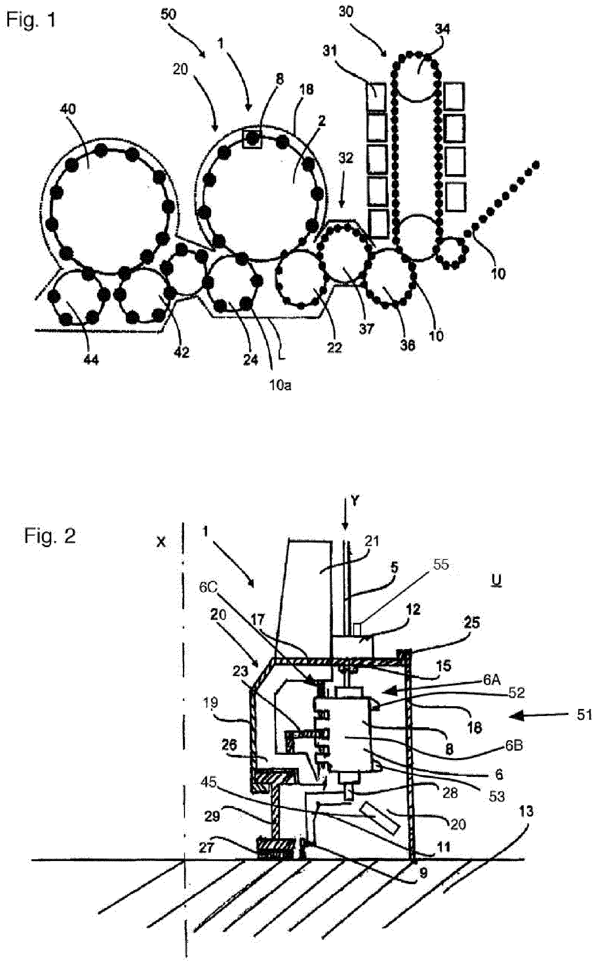

In der Figur 1 ist eine schematische Darstellung einer Anlage 50 zum Herstellen von Kunststoffbehältnissen 10a gezeigt. Diese Anlage 50 weist eine Heizeinrichtung 30 auf, in der Kunststoffvorformlinge 10 erwärmt werden. Dabei werden diese Kunststoffvorformlinge 10 mittels einer Transporteinrichtung 34, wie hier einer umlaufenden Kette, durch diese Heizeinrichtung 30 geführt und dabei mit einer Vielzahl von Heizelementen 31 erwärmt. An diese Heizeinrichtung 30 schließt sich eine Übergabeeinheit 36 an, welche die Kunststoffvorformlinge 10 an eine Sterilisationseinrichtung 32 übergibt. Diese Sterilisationseinrichtung 32 weist dabei ebenfalls zumindest ein Transportrad 37 auf, und an diesem Transportrad 37 oder auch stationär können Sterilisationselemente angeordnet sein. In diesem Bereich ist beispielsweise eine Sterilisation durch Wasserstoffperoxidgas oder auch, wie oben erwähnt, durch elektromagnetische bzw. UV-Strahlung möglich. Insbesondere wird in diesem Bereich eine Innensterilisation der Kunststoffvorformlinge 10 durchgeführt. Bevorzugt wird in der Sterilisationseinrichtung eine Innen- und Außensterilisation der Kunststoffvorformlinge durchgeführt.

Das Bezugszeichen 20 bezeichnet in seiner Gesamtheit einen Reinraum, dessen Außenbegrenzungen hier durch die punktierte Linie L angedeutet ist. In einer weiteren bevorzugten Ausführungsform ist der Reinraum 20 nicht nur im Bereich von Transportrad 2 und einer Befüllungseinrichtung 40 angeordnet, sondern beginnt möglicherweise schon im Bereich der Heizeinrichtung 30, der Sterilisationseinrichtung 32, der Kunststoffvorformlingzuführung und/oder der Kunststoffvorformlingherstellung. Man erkennt, dass dieser Reinraum 20 in dem Bereich der Sterilisationseinheit 32 beginnt. In diesem Bereich können Schleuseneinrichtungen vorgesehen sein, um die Kunststoffvorformlinge 10 in den Reinraum 20 einzuführen, ohne dass dabei zu viel Gas aus dem Reinraum 20 strömt und so verloren geht.

Der Reinraum 20 ist, wie durch die gestrichelte Linie L angedeutet, an die Außengestalt der einzelnen Anlagenkomponenten angepasst. Auf diese Weise kann das Volumen des Reinraums 20 reduziert werden.

Das Bezugszeichen 1 bezeichnet in ihrer Gesamtheit eine Umformvorrichtung zum Umformen von Kunststoffvorformlingen 10 zu Kunststoffbehältnissen 10a, bei der an einem Transportrad 2 eine Vielzahl von Blasstationen 8 angeordnet ist, wobei hier (siehe Figur 2) lediglich eine dieser Blasstationen 8 detaillierter dargestellt ist. Mit diesen Blasstationen 8 werden die Kunststoffvorformlinge 10 zu den Kunststoffbehältnissen 10A expandiert. Obwohl hier nicht detailliert gezeigt, befindet sich nicht der gesamte Bereich des Transporteinrichtung 2 innerhalb des Reinraums 20, sondern der Reinraum 20 bzw. Isolator ist gewissermaßen als Mini-Isolator innerhalb der gesamten Umformvorrichtung1 realisiert. So wäre es möglich, dass der Reinraum 20 zumindest im Bereich der Umformvorrichtung 1 kanalartig ausgeführt ist.

Das Bezugszeichen 22 bezieht sich auf eine Zuführeinrichtung, welche die Kunststoffvorformlinge 10 an die Umformvorrichtung 1 übergibt und das Bezugszeichen 24 auf eine Abführeinrichtung, welche die hergestellten Kunststoffbehältnisse 10A von der Umformvorrichtung 1 abführt. Man erkennt, dass der Reinraum 20 in dem Bereich der Zuführeinrichtung 22 und der Abführeinrichtung 24 jeweils Ausnehmungen aufweist, welche diese Einrichtungen 22, 24 aufnehmen. Auf diese Weise kann in besonders vorteilhafter Weise eine Übergabe der Kunststoffvorformlinge 10 an die Umformvorrichtung 1 bzw. eine Übernahme der Kunststoffbehältnisse 10A von der Umformvorrichtung 1 erreicht werden.

Mit einer Übergabeeinheit 42 werden die expandierten Kunststoffbehältnisse 10A an eine Befüllungseinrichtung 40 übergeben und von dieser Befüllungseinrichtung 40 anschließend über eine weitere Transporteinheit 44 abgeführt. Dabei befindet sich auch die Befüllungseinrichtung 40 innerhalb des besagten Reinraums 20. Auch im Falle der Befüllungseinrichtung 40 wäre es möglich, dass nicht die gesamte Befüllungseinrichtung 40 mit beispielsweise einem Reservoir für ein Getränk vollständig innerhalb des Reinraums 20 angeordnet ist, sondern auch hier lediglich diejenigen Bereiche, in denen tatsächlich die Kunststoffbehältnisse 10A geführt werden. Insoweit könnte auch die Befüllungseinrichtung 40 in ähnlicher Weise aufgebaut sein wie die Umformvorrichtung 1 zum Umformen der Kunststoffvorformlinge 10.

Wie erwähnt, ist der Reinraum 20 im Bereich der Umformvorrichtung 1 auf einen geringst möglichen Bereich reduziert, nämlich im Wesentlichen auf die Blasstationen 8 selbst. Durch diese kleinbauende Gestaltung des Reinraums 20 ist es leichter und schneller möglich, einen Reinraum 20 überhaupt herzustellen und auch die Sterilhaltung in der Betriebsphase ist weniger aufwändig. Auch wird weniger Sterilluft benötigt, was zu kleineren Filteranlagen führt und auch die Gefahr von unkontrollierter Wirbelbildung wird reduziert.

Darüber hinaus kann noch eine hier nicht weiter gezeigte Beaufschlagungseinrichtung vorgesehen sein, welche zum Beaufschlagen insbesondere der Blasstationen 8 mit dem fließfähigen Sterilisationsmittel dient. Diese Beaufschlagungseinrichtung kann sich am Transportrad 2 oder an der stehenden Wandung 18 befinden oder generell stationär angeordnet sein und Düsen oder ähnliches aufweisen. Zudem kann es vorteilhaft sein, Sterilluft und/oder Sterilisationsmedium zum Sterilisieren des Reinraums 20 über das Lüftungssystem in den Reinraum 20 einzubringen. Alternativ oder zusätzlich könnte es sich bei der Beaufschlagungseinrichtung jedoch auch um eine Einrichtung handeln, welche die Blasstationen 8 mit (insbesondere elektromagnetischer) Strahlung, z.B. UV - oder Elektronenstrahlung beaufschlagt. In diesem Falle wäre vorteilhaft wenigstens ein Bereich der Dichtungseinrichtung in einem zusammengebauten Zustand der Bauteile für diese elektromagnetische Strahlung erreichbar. Das in der Figur 2 gezeigte Bezugszeichen U bezieht sich auf eine (unsterile) Umgebung des Reinraums 20.

Figur 2 zeigt eine Detaildarstellung der Umformvorrichtung 1 im Bereich einer der Blasstationen 8. Eine Vielzahl derartiger Blasstationen 8 wird mit einer Transporteinrichtung 2 (d.h. dem Träger 2) drehend um eine Achse X bzw. Blasraddrehachse bewegt. Die Blasstation 8 ist, wie in Figur 2 ersichtlich, innerhalb des Reinraums 20, der hier kanalartig ausgebildet ist, geführt. Dieser Reinraum 20 wird abgeschlossen durch eine bewegliche Seitenwand 19 und einen einteilig mit dieser Seitenwand 19 ausgebildeten Deckel 17. Diese Seitenwand 19 und der Deckel 17 drehen dabei mit der Blasstation 8 mit.

Das Bezugszeichen 18 bezieht sich auf eine weitere Wandung, welche den Reinraum 20 begrenzt. Diese Wandung 18 ist hier eine außen liegende Wandung, welche stationär angeordnet ist. Zwischen dem Deckel 17 und der Wandung 18 ist eine Dichtungseinrichtung 25 vorgesehen, welche die gegeneinander beweglichen Elemente 17 und 18 gegeneinander abdichtet, beispielsweise, wie oben erwähnt, unter Verwendung eines Wasserschlosses. Der untere Bereich der Wandung 18 ist fest und abdichtend an einem Boden 13 angeordnet. Innerhalb des Reinraums 20 und hier unmittelbar an der Wandung 19 anliegend ist ein Träger 26 vorgesehen, der sich ebenfalls drehend bewegt und an dem wiederum eine Halteeinrichtung 23 vorgesehen ist, welche die Blasstation 8 hält.

Das Bezugszeichen 45 kennzeichnet hier noch eine Beaufschlagungseinrichtung, welche zum Beaufschlagen der Umformungsstationen mit dem fließfähigen Sterilisationsmittel dient. Diese Beaufschlagungseinrichtung 45 kann sich am Transportrad 2 oder an der stehenden Wandung 18 befinden oder generell stationär angeordnet sein und Düsen oder ähnliches aufweisen. Zudem ist es vorteilhaft, Sterilluft zum Sterilisieren des Reinraums 20 über das Lüftungssystem in den Reinraum 20 einzubringen.

Alternativ oder zusätzlich könnte es sich bei der Beaufschlagungseinrichtung 45 jedoch auch um eine Einrichtung handeln, welche die Umformungsstationen mit (insbesondere elektromagnetischer) Strahlung, z.B. UV- oder Elektronenstrahlung beaufschlagt. In diesem Falle wäre vorteilhaft wenigstens ein Bereich der Dichtungseinrichtung in einem zusammengebauten Zustand der Bauteile für diese elektromagnetische Strahlung erreichbar.

Das Bezugszeichen 11 bezieht sich auf eine Folgeeinrichtung, welche von einer Führungskurve 9 betätigt werden kann, um die Blasstation 8 auf ihrem Weg durch den Reinraum 20 zu öffnen und zu schließen, um insbesondere den Kunststoffvorformling 10 in die Blasstation 8 einzulegen und um ihn auch wieder zu entnehmen. Dabei ist eine Führungskurve 9 auch innerhalb des Reinraums 20 angeordnet. Es wäre jedoch beispielsweise auch möglich, etwa bereits einen Abschnitt 28 unterhalb der einzelnen Blasstationen 8 aus dem Reinraum 20 herauszuführen.

Der Träger 26 ist dabei fest auf einem Haltekörper 29 angeordnet und dieser Haltekörper 29 ist wiederum beweglich gegenüber dem Boden 13. Dabei bezieht sich das Bezugszeichen 27 auf eine weitere Dichtungseinrichtung, welche auch in diesem Bereich eine Abdichtung der gegeneinander beweglichen Bereiche 13 und 29 bewirkt.

Das Bezugszeichen 5 bezieht sich auf ein Reckstangenelement, welches gegenüber der Blasstation 8 beweglich ist, um die Kunststoffvorformlinge 10 in ihrer Längsrichtung zu recken. Dabei ist auf dem Deckel 17 hier ein Schlitten 12 angeordnet, demgegenüber dem Reckstangenelement 5 in der Reckrichtung Y beweglich ist. Das Bezugszeichen 21 bezieht sich auf eine weitere Halterung für diesen Schlitten 12 des Reckstangenelements 5.

Man erkennt, dass bestimmte Bereiche des Reckstangenelements 5 während des Blasvorgangs sowohl außerhalb des Reinraums 20 als auch innerhalb des Reinraums 20 angeordnet sind. Zu diesem Zweck ist es möglich, außerhalb des Reinraums 20 bzw. oberhalb des Schlittens 12 eine Schutzeinrichtung wie einen Faltenbalg vorzusehen, der das Reckstangenelement 5 umgibt, so dass kein Bereich des Reckstangenelements 5 unmittelbar mit der Außenumgebung in Berührung kommt.

Die Umformvorrichtung 1 zeichnet sich durch eine zweiteilige Blasform 6 aus, welche an einem ersten und zweiten Blasformteilträger 6A und 6B gehaltert ist, wobei die beiden Blasformteilträger 6A und 6B eine gemeinsame Schwenkwelle 6C aufweisen.

Die zweiteilige Blasform 6 wird bei einem Blasvorgang mittels einer Verriegelungseinrichtung 51 mit zwei Verriegelungselementen 52 und 53 verschlossen gehalten.

Um bei einem Blasvorgang die jeweilige zweiteilige Blasform 6 mit entsprechenden Blasdruckstufen beaufschlagen zu können, umfasst die Umformvorrichtung 1 eine erfindungsgemäße Steuereinrichtung 55 zum Steuern des jeweiligen Blasdrucks an der jeweiligen Blasstation 8. In diesem Ausführungsbeispiel ist an jeder der Blasstationen 8 eine derartige Steuereinrichtung 55 vorgesehen.

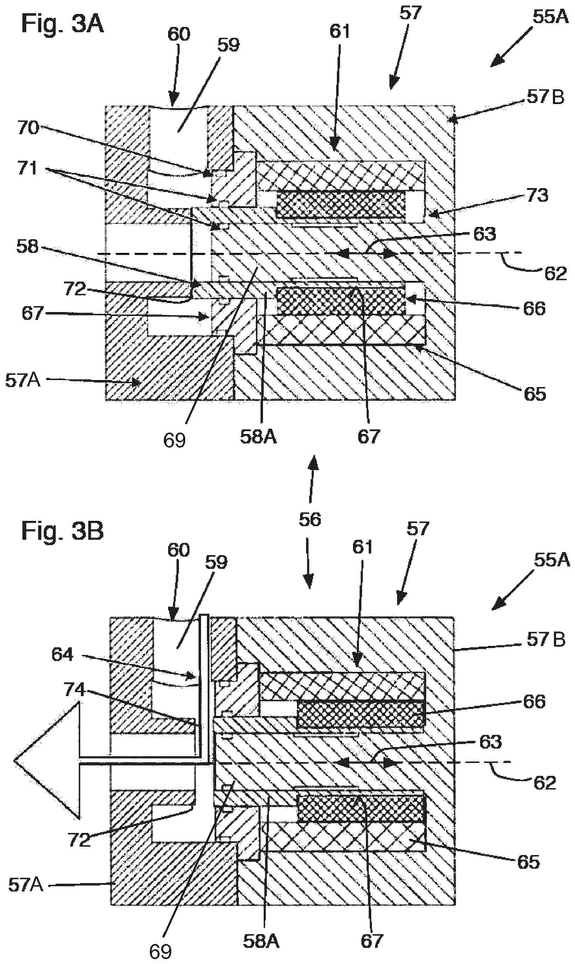

In den Darstellungen der Figuren 3 bis 5 sind erste Beispiele von unterschiedlich bauenden Steuereinrichtungen 55A, 55B und 55C dargestellt.

Komponenten, welche insbesondere in den einzelnen Figuren wenigstens im Wesentlichen hinsichtlich ihrer Funktion übereinstimmen, sind vorliegend mit gleichen Bezugszeichen gekennzeichnet, wobei diese Komponenten nicht in allen Figuren beziffert und erläutert sein müssen.

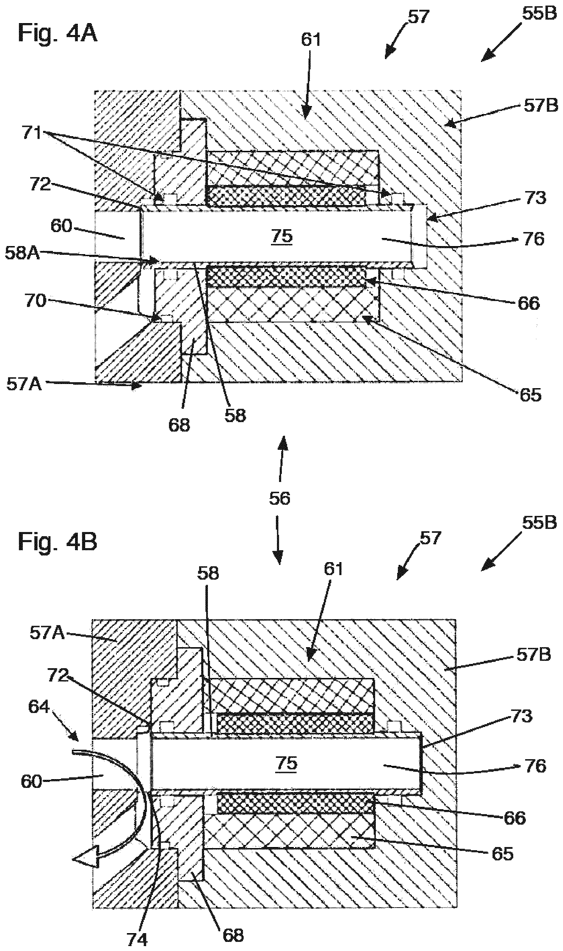

Alle in den Figuren 2 bis 5 gezeigten Steuereinrichtungen 55, 55A, 55B und 55C umfassen ein Blasdrucksteuerventil 56, welches ein in einem Zylinderteil 57, das ein Steuerventilgehäuse (nicht explizit beziffert) bildet, geführten Steuerkolbenteil 58 umfasst, mittels welchem ein Blasluftkanalquerschnitt 59 eines Blasluftkanals 60 zumindest bereichsweise verändert, das heißt verschlossen (siehe Figuren 3A, 4A) oder geöffnet (siehe Figuren 3B, 4B, 5), werden kann.

Der Blasluftkanal 60 ist hierbei in einem Zylinderkopfteil 57A des Zylinderteils 57 ausgebildet, welcher kopfseitig an einem Zylinderfußteil 57B des Zylinderteils angeflanscht ist.

Jeder der Steuereinrichtungen 55, 55A, 55B und 55C weist mindestens eine elektromagnetisch arbeitende Antriebeinheit 61 auf, um eine Lageveränderung des Steuerkolbenteils 58 entlang einer Axialschiebeachse 62 innerhalb des Zylinderteils 57 zu bewirken und damit auch die Blasdrücke an den Blasstationen 8 zu steuern. Hierdurch können einerseits die Steuereinrichtungen 55, 55A, 55B und 55C extrem kompakt bauen und andererseits das Steuerkolbenteil 58 kann dennoch besonders exakt und reaktionsschnell entlang der Axialschiebeachse 62 verlagert werden, wodurch das Blasdrucksteuerventil 56 mit hoher Präzision geöffnet und verschlossen werden kann.

Um die Antriebskräfte zum Verlagern des Steuerkolbenteils 58 erheblich zu reduzieren, umfasst es ein Rohrkolbenelement 58A, wodurch das Steuerkolbenelement 58 insgesamt leichter baut und damit auch leichter entlang der Axialschiebeachse 63 axial verschoben bzw. verlagert werden kann.

Zudem gelingt es mittels der elektromagnetisch arbeitenden Antriebeinheit 61, das Steuerkolbenteil 58 mit einer variablen Hubweglänge 63 zu verlagern, so dass das Blasdrucksteuerventil 56 auch als Drosselventil eingesetzt werden kann, um einen durch den Blasluftkanal geleiteten Blasdruckluftvolumenstrom 64 nahezu beliebig drosseln zu können.

Die elektromagnetisch arbeitende Antriebeinheit 61 setzt sich im Wesentlichen aus einem Statorwicklungsteil 65, welches ortsfest in dem Zylinderfußteil 57B des Steuerventils 56 eingelassen ist, und aus einem Läuferwicklungsteil 66, welches an dem Steuerkolbenteil 58 festgelegt ist, zusammen.

Das Steuerkolbenteil 58 ist radial außen mittels seines Läuferwicklungsteils 66 an dem Statorwicklungsteil 65 geführt. Das Läuferwicklungsteil 66 gestaltet zumindest teilweise die Mantelfläche 67 des Steuerkolbenteils 58 aus.

Des Weiteren ist zwischen dem Zylinderfußteil 57B und dem Zylinderkopfteil 57A noch ein weiteres Führungsringteil 68 für das Steuerkolbenteil 58 angeordnet, an welchem das Steuerkolbenteil 58 zusätzlich radial außen geführt ist.

Ferner ist das Steuerkolbenteil 58 bei der in den Figuren 3A und 3B gezeigten Steuereinrichtung 55A zusätzlich noch an einem in das Rohrkolbenelement 58A hineinragenden und insbesondere auch hineinkragenden Führungsbolzenteil 69 radial innen geführt bzw. gelagert.

Das Führungsringteil 67 und das Führungsbolzenteil 69 sind noch durch eine äußere O-Ring-Dichtung 70 bzw. durch zwei radial weiter innen angeordnete Dichtungen 71 gegenüber dem Zylinderkopfteil 57A und dem Steuerkolbenteil 58 abgedichtet, so dass keine Blasdruckluft zum Zylinderfuß 57B hin und in die Umgebung entweichen kann.

Gemäß der Darstellung nach der Figur 3A ist das Steuerventil 56 geschlossen, dass heißt, dass das Steuerkolbenteil 58 vollständig in Richtung des Zylinderkopfteils 57A verschoben und gegen einen Rohrkolbenelementsitz 72 angeschlagen ist, so dass der Blasluftkanal 60 insbesondere durch das Rohrkolbenelement 58A des Steuerkolbenteils 58 verschlossen ist.

Gemäß der Darstellung nach der Figur 3B ist das Steuerventil 56 jedoch geöffnet, wobei das Steuerkolbenteil 58 gegen eine am Zylinderfußteil 57B vorgesehene Anschlagsfläche 73 verschoben ist. Hierdurch ist eine zuvor verschlossene Durchgangsöffnung 74 (siehe Figur 3B) des Blasluftkanals 60 freigegeben, so dass der Blasdruckluftvolumenstrom 64 den Blasluftkanal 60 durchströmen und weiter in die jeweilige Blasform 6 einströmen kann, um den darin zuvor eingebrachten Kunststoffvorformling 10 zu dem Kunststoffbehältnis 10A zu expandieren.

Die in den Figuren 4A und 4B gezeigte Steuereinrichtung 55B weist ebenfalls ein Blasdrucksteuerventil 56 mit einem Zylinderteil 57 bestehend aus einem Zylinderkopfteil 57A und einem Zylinderfußteil 57B auf, in welchem ein Steuerkolbenteil 58 mit einem Rohrkolbenelement 58A entlang einer Axialschiebeachse 62 verlagerbar gelagert ist.

Angetrieben wird das Steuerkolbenteil 58 erfindungsgemäß wieder durch eine elektromagnetisch arbeitende Antriebeinheit 61, die im Wesentlichen aus einem im Zylinderfußteil 57B platzierten Statorwicklungsteil 65 und einem an dem Steuerkolbenteil 58 radial außen angeordneten Läuferwicklungsteil 66 besteht.

Das Rohrkolbenelement 58A ist radial außen wieder an dem Statorwicklungsteil 65 sowie an einem zwischen dem Zylinderfußteil 57B und dem Zylinderkopfteil 57A festgelegten Führungsringteil 68 geführt.

Dieses Führungsringteil 68 ist gegenüber dem Zylinderkopfteil 57A mit einer äußeren O-Ring-Dichtung 70 abgedichtet. Das Steuerkolbenteil 58 ist gegenüber dem Führungsringteil 68 und dem Zylinderfußteil 57B mit zwei inneren Dichtungen 71 abgedichtet. So wird verhindert, dass ein Blasdruckluftvolumenstrom 64, welcher bei geöffnetem Steuerventil 56 durch einen im Zylinderkopfteil 57A eingebrachten Blasluftkanal 60 strömt, in Bereiche des Zylinderfußteils 57B entweichen kann.

Im Gegensatz zu der in den Figuren 3A und 3B gezeigten Steuereinrichtung 55A ist bei der Steuereinrichtung 55B auf das Führungsbolzenteil 69 (siehe Figuren 3) verzichtet worden, so dass sich innerhalb des Rohrkolbenelements 58A ein Hohlraum 75 für eine Druckausgleichskammer 76 ergibt. Durch dieses blasdruckausgeglichene Rohrkolbenelement 58A können die durch die elektromagnetisch arbeitende Antriebeinheit 61 aufzubringenden Antriebskräfte weiter vorteilhaft reduziert werden.

Gemäß der Darstellung nach der Figur 4A ist das Steuerventil 56 der Steuereinrichtung 55B geschlossen, dass heißt, dass das Steuerkolbenteil 58 vollständig in Richtung des Zylinderkopfteils 57A verschoben und gegen einen Rohrkolbenelementsitz 72 angeschlagen ist, so dass der Blasluftkanal 60 insbesondere durch das Rohrkolbenelement 58A des Steuerkolbenteils 58 verschlossen ist.

Gemäß der Darstellung nach der Figur 4B ist das Steuerventil 56 geöffnet, wobei das Steuerkolbenteil 58 gegen eine am Zylinderfußteil 57B vorgesehene Anschlagsfläche 73 verschoben ist. Hierdurch ist eine zuvor verschlossene Durchgangsöffnung 74 (siehe Figur 4B) des Blasluftkanals 60 freigegeben, so dass der Blasdruckluftvolumenstrom 64 den Blasluftkanal 60 passieren und in die jeweilige Blasform 6 einströmen kann, um den darin zuvor eingebrachten Kunststoffvorformling 10 zu dem Kunststoffbehältnis 10a zu expandieren.

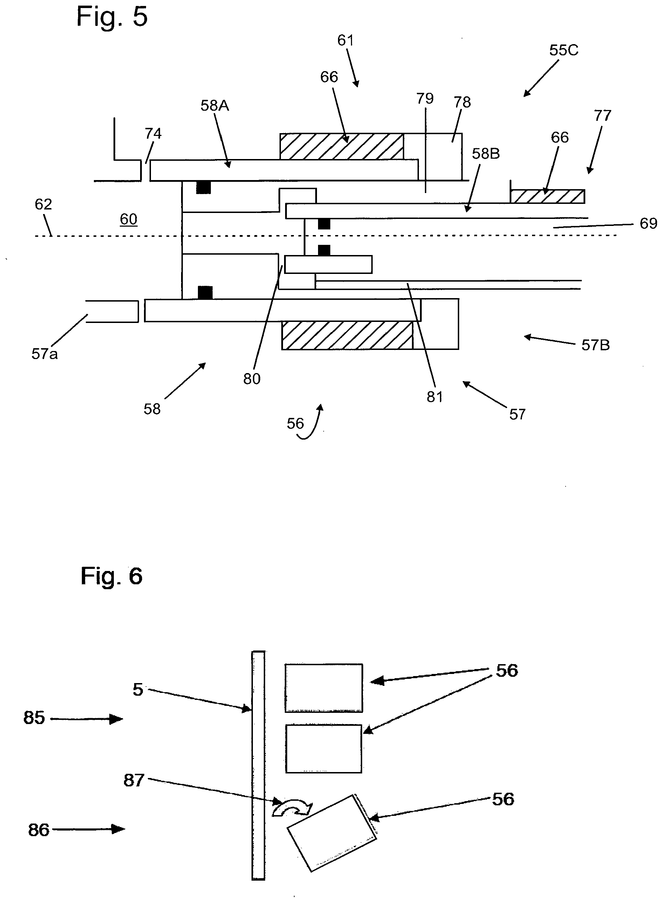

Die in der Figur 5 gezeigte weitere Steuereinrichtung 55C weist ein Steuerkolbenteil 58 auf, welches im Gegensatz zu den zuvor beschrieben Steuereinrichtungen 55A und 55B (Figuren 3 bzw. 4) zwei Rohrkolbenelemente 58A und 58B umfasst, wobei das innere Rohrkolbenelement 58B der beiden Rohrkolbenelemente 58A, 58B axial verschieblich in dem äußeren Rohrkolbenelement 58A der beiden Rohrkolbenelement 58A und 58B angeordnet ist.

Hierbei ist dem äußeren Rohrkolbenelement 58A eine erste elektromagnetisch arbeitende Antriebeinheit 61 und dem inneren Rohrkolbenelement 58B ist eine weitere elektromagnetisch arbeitende Antriebeinheit 77 zugeordnet. Insofern sitzen entsprechende Läuferwicklungsteile 66 außen auf den Rohrkolbenelementen 58A und 58B.

Die Steuereinrichtung 55C besitzt ebenfalls ein Zylinderteil 57, dessen Zylinderkopfteil 57A und Zylinderfußteil 57B nur andeutungsweise in der Figur 5 dargestellt sind. Das Zylinderfußteil 57B weist ein Außenbauteil 78 und ein Innenbauteil 79 auf, wobei radial außen an dem Innenbauteil 79 das äußere Rohrkolbenelement 58A und radial innen an dem Innenbauteil 79 das innere Rohrkolbenelement 58B axial verschieblich geführt sind. Das äußere Rohrkolbenelement 58A ist radial außen insbesondere mit seinem Läuferwicklungsteil 66 noch an einem hier nicht gezeigten Statorwicklungsteil der ersten elektromagnetisch arbeitenden Antriebeinheit 61 axial verschieblich geführt. Das innere Rohrkolbenelement 58B ist innen mit einem Führungsbolzenteil 69 zusätzlich axial verschieblich geführt.

Jedenfalls kann mittels des äußeren Rohrkolbenelements 58A eine Durchgangsöffnung 74 eines Blasluftkanals 60 für einen ersten Blasluftdruck und mittels des inneren Rohrkolbenelements 58B eine weitere Durchgangsöffnung 80 eines weiteren Blasluftkanals 81 für einen weiteren Blasluftdruck verschlossen werden; oder die weitere Durchgangsöffnung 80 für die erste Druckstufe und der Blasdruckkanal 60 für die zweite Druckstufe; oder die weitere Durchgangsöffnung 80 für eine Druckstufe und der Blasdruckkanal 60 zum Entlasten als Exhaust-Ventil.

Insofern ist es an der Blasstation 8 möglich, auch ein 3/2-Wege-Steuerventil 56A konstruktiv einfach ohne eine Steuerlufteinrichtung zu kreieren, mittels welchem unterschiedliche Blasdrücke zum Umformen eines Kunststoffvorformlings 10 zu einem Kunststoffbehältnis 10A sofort an einer Umformvorrichtung 1 bzw. an einer Umformvorrichtung 1 vorteilhaft bereitgestellt werden können.

Bei der in der Figur 6 gezeigten Darstellung sind unterschiedliche Anordnungen 85 und 86 illustriert, in welchen beispielhaft vorteilhafte Winkelausrichtungen von Blasdrucksteuerventilen 56 gegenüber dem Reckstangenelement 5 dargestellt sind.

Bei der oberen Anordnung 85 sind die beiden Blasdrucksteuerventile 56 senkrecht bzw. parallel zu dem Reckstangenelement 5 orientiert ausgerichtet.

Bei der unteren Anordnung 86 ist das Blasdrucksteuerventil 56 in einem 45°-Winkel gegenüber dem Reckstangenelement 5 geneigt angeordnet.

Insbesondere können die Blasdrucksteuerventile 56 gegenüber dem Reckstangenelement 5 mit Winkeln 87 zwischen 0° und 180° vorteilhaft angeordnet in einer Umformeinrichtung 1 integriert werden.

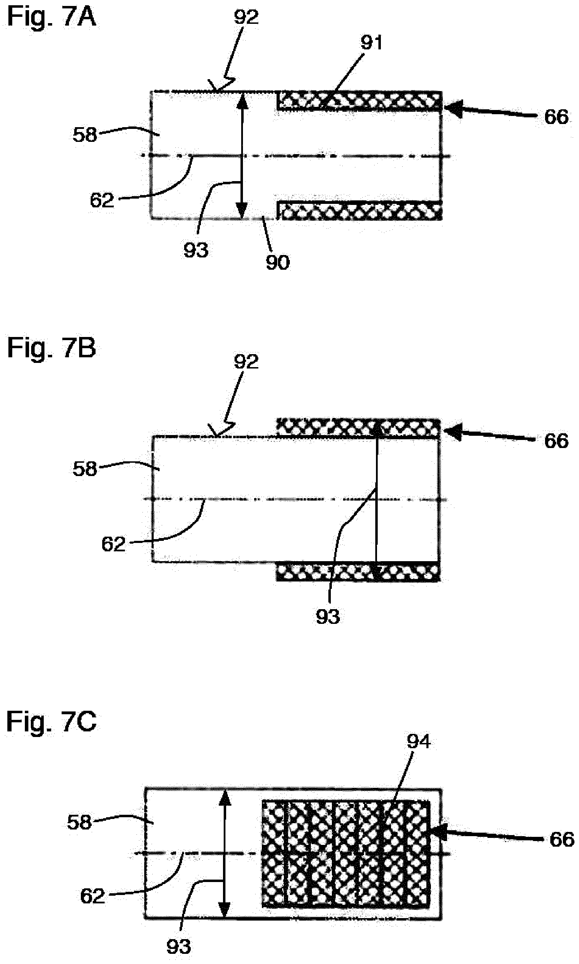

Bei dem in der Figur 7A gezeigten Steuerkolbenteil 58 ist das Läuferwicklungsteil 66 an einem in der Wandung 90 des Rohrkolbenelements 58A angearbeiteten Absatz 91 derart angeordnet, so dass das Läuferwicklungsteil 66 mit der äußeren Umfangsfläche 92 plan abschließt. Hierdurch vergrößert das Läuferwicklungsteil 66 den Außendurchmesser 93 des Steuerkolbenteils 58 insgesamt nicht.

Bei dem in der Figur 7B gezeigten Steuerkolbenteil 58 ist das Läuferwicklungsteil 66 alternativ auf der äußeren Umfangsfläche 92 aufgesetzt angeordnet. Hierdurch vergrößert das Läuferwicklungsteil 66 jedoch den Außendurchmesser 93 des Steuerkolbenteils 58 insgesamt.

Bei dem in der Figur 7C ist das Steuerkolbenteil 58 mit einem Permanentmagnetelement 94 als Läuferwicklungsteil 66 ausgerüstet, welches im Inneren des Rohrkolbenelements 58A befestigt ist. Somit wird der eigentliche Außendurchmesser 93 des Rohrkolbenelements 58A durch das Läuferwicklungselement 66 nicht vergrößert.

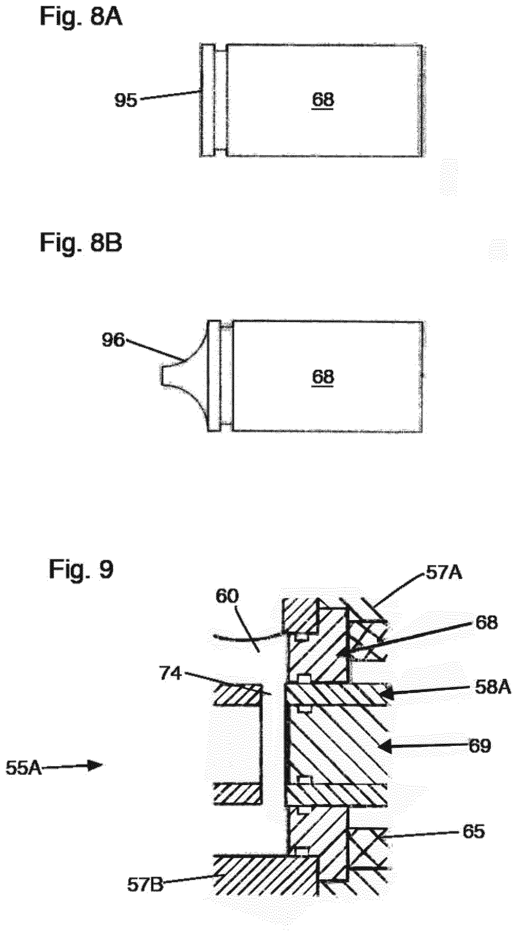

Das in der Figur 8A gezeigte Führungsbolzenteil 68 weist eine plane Kopfseite 95 auf, welche einen Teil eines Blasluftkanals 60 ausgestaltet.

Das in der Figur 8B gezeigte alternative Führungsbolzenteil 68 weist eine konturierte Kopfseite 96 für eine optimierte Blasluftströmung in einem entsprechend ausgestalteten Blasluftkanal 60 auf.

Bei der in der Figur 9 nur ausschnittsweise gezeigten Steuereinrichtung 55A (vgl. Figuren 3) ist eine bevorzugte Werkstoffpaarung hinsichtlich der zueinander beweglichen Komponenten, wie etwa das Rohrkolbenelement 58A des Steuerkolbenteils 58, das Führungsbolzenteil 69 und das Führungsringteil 68 beispielhaft erläutert.

Bei einer ersten beispielhaften und vorteilhaften Werkstoffpaarung sind das Rohrkolbenelement 58A aus einem Kunststoff und das Führungsbolzenteil 69 sowie das Führungsringteil 68 jeweils aus Metall hergestellt.

Bei einer alternativen vorteilhaften Werkstoffpaarung können das Rohrkolbenelement 58A aus Metall und das Führungsbolzenteil 69 sowie das Führungsringteil 68 jeweils aus einem Kunststoff bestehen.

Natürlich können auch andere Werkstoffpaarungen vorteilhaft zum Einsatz kommen, um günstige Reibwerte zwischen den zueinander beweglichen Komponenten zu erhalten, wodurch wiederum die erforderlichen Antriebskräfte, welche von der elektromagnetisch arbeitenden Antriebeinheit 61 aufzubringen sind, reduziert werden können.

An dieser Stelle sei explizit darauf hingewiesen, dass Dichtflächen vorteilhafterweise aus einem weicheren oder härteren Werkstoff als das der Kolben ausgeführt sein können.

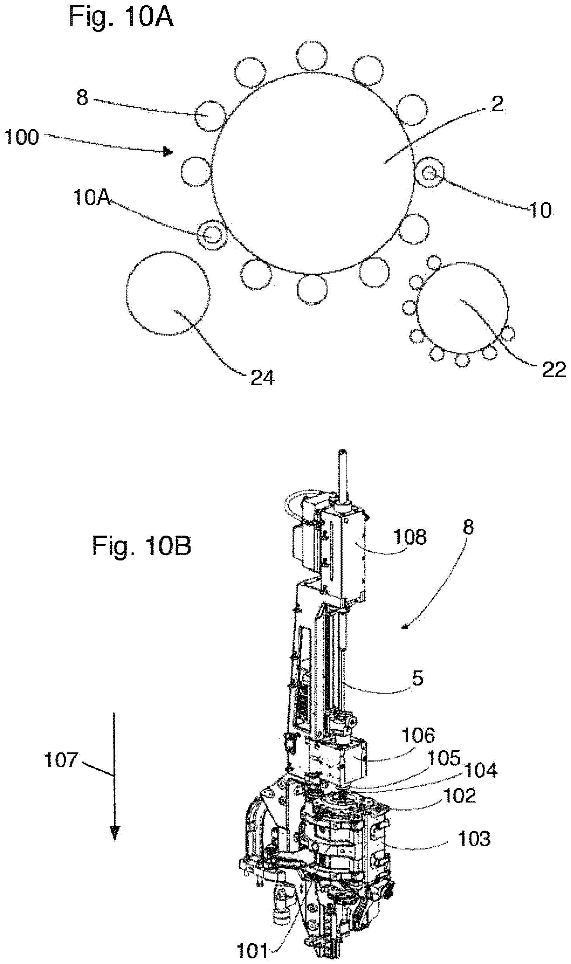

Die Figur 10a zeigt eine schematische Darstellung einer alternativen Anordnung 100 mit einer Umformvorrichtung 1 zum Umformen von Kunststoffvorformlingen 10 zu Kunststoffbehältnissen 10A. Hierbei werden über eine Zuführeinrichtung 22, wie beispielsweise einen Zuführstern, die Kunststoffvorformlinge 10 einer Vielzahl von Umformungsstationen 8 zugeführt. Diese Umformungsstationen 8 sind dabei an einem drehbaren Träger angeordnet. Während ihres Transports entlang eines Transportpfades werden die Kunststoffvorformlinge 10 zu den Kunststoffbehältnissen 10a expandiert. Die so expandierten Kunststoffbehältnisse 10a werden über eine Abführeinrichtung 24 wieder von dem Transportrad 2 abgenommen und weiter transportiert. Bei dem Transportrad 2, der Zuführeinrichtung 22 und/oder der Abführeinrichtung 24 kann es sich jeweils um Transportsterne handeln.

Die Figur 10B zeigt eine Darstellung einer einzelnen Umformungsstation 8. Diese Umformungsstation 8 weist dabei eine Blasformeinrichtung auf, bei der hier zwei Seitenteile 101 und 102 gezeigt sind, die um eine Achse gegeneinander geschwenkt werden können, welche senkrecht zu dem Transportpfad der Kunststoffbehältnisse 10a ist. Durch diesen Vorgang können Kunststoffvorformlinge 10 in diese Blasformanordnung eingebracht werden und mittels Blasluft expandiert werden. Das Bezugszeichen 103 kennzeichnet eine Verriegelungseinrichtung zum Verriegeln der beiden Blasformteile miteinander.

Für die Expansion wird eine Blasdüse 104 auf die Kunststoffvorformlinge 10 oder einen Teil der Blasform 6 aufgesetzt, um diese so mit Druckluft beaufschlagen zu können. Diese Blasdüse 104 ist dabei an einen nur teilweise dargestellten Blaskolben 105 angeordnet. Das Bezugszeichen 106 kennzeichnet einen Ventilblock, in dem eine Vielzahl von Ventilen angeordnet ist, um die Beaufschlagung der Kunststoffvorformlinge 10 mit unterschiedlichen Druckniveaus zu steuern.

Das Bezugszeichen 5 kennzeichnet ein Reckstangenelement, welches in das Innere der Kunststoffvorformlinge 10 einführbar ist, um diese während ihrer Expansion in ihrer Längsrichtung 107 zu dehnen. Das Bezugszeichen 108 kennzeichnet einen entsprechenden Antrieb, wie einen Linearmotor, der die Bewegung des Reckstangenelements 5 in dieser Längsrichtung 107 steuert. Weiterhin ist es auch möglich, dass der Blaskolben 105 ebenfalls in dieser Längsrichtung 107 bewegt wird, was beispielsweise mittels Führungskurven erfolgen kann.

Die in den Figuren 10A und 10B gezeigte Umformvorrichtung 1 befindet sich nicht in einem Reinraum, sie ist aber mit einer Steuereinrichtung ausgerüstet, welche eine elektromagnetisch arbeitende Antriebeinheit 61 bzw. 77 aufweist, um eine Lageveränderung des Steuerkolbenteils 58 innerhalb des Zylinderteils 57 zu bewirken und damit auch die Blasdrücke und/oder Volumenströme an den Umformstationen 8 zu steuern, wie bereits vorstehend ausführlich erläutert. Um Wiederholungen zu vermeiden, wird deshalb auf die vorstehenden, erläuterten Merkmalen bzw. deren Erläuterungen verwiesen, welche ebenfalls auf die alternative Anordnung angewendet werden können.

Es versteht sich, dass es sich bei den vorstehend erläuterten Ausführungsbeispielen lediglich um erste Ausgestaltungen der erfindungsgemäßen Umformvorrichtung handelt. Insofern beschränkt sich die Ausgestaltung der Erfindung nicht auf diese Ausführungsbeispiele.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung
- 2: Transportrad
- 5: Reckstangenelement
- 6: Blasform
- 6A: erster Blasformteilträger
- 6B: zweiter Blasformteilträger
- 6C: Schwenkwelle
- 8: erste Blasstation bzw. Umformstation
- 9: Führungskurve
- 10: Kunststoffvorformling
- 10A: Kunststoffbehältnis
- 11: Folgeeinrichtung
- 12: Schlitten
- 13: Boden
- 17: Deckel
- 18: Wandung
- 19: Seitenwand
- 20: Reinraum
- 21: weitere Halterung
- 22: Zuführeinrichtung
- 23: Halteeinrichtung
- 24: Abführeinrichtung
- 25: Dichtungseinrichtung
- 26: Träger
- 27: weitere Dichtungseinrichtung
- 28: Abschnitt
- 29: Haltekörper
- 30: Heizeinrichtung
- 31: Heizelementen
- 32: Sterilisationseinrichtung
- 34: Transporteinrichtung
- 36: Übergabeeinheit
- 37: Transportrad
- 40: Befüllungseinrichtung
- 42: Übergabeeinheit
- 44: Transporteinheit
- 45: Beaufschlagungseinrichtung
- 50: Anlage zum Herstellen
- 51: Verriegelungseinrichtung
- 52: erstes Verriegelungselement
- 53: zweites Verriegelungselement
- 55: Steuereinrichtung
- 55A: weitere Steuereinrichtung
- 55B: weitere Steuereinrichtung
- 55C: weitere Steuereinrichtung
- 56: Blasdrucksteuerventil
- 57: Zylinderteil
- 57A: Zylinderkopfteil
- 57B: Zylinderfußteil
- 58: Steuerkolbenteil
- 58A: Rohrkolbenelement bzw. äußeres Rohrkolbenelement
- 58B: inneres Rohrkolbenelement
- 59: Blasluftkanalquerschnitt
- 60: Blasluftkanal
- 61: elektromagnetisch arbeitende Antriebeinheit
- 62: Axialschiebeachse
- 63: variable Hubweglänge
- 64: Blasdruckluftvolumenstrom
- 65: Statorwicklungsteil
- 66: Läuferwicklungsteil
- 67: Mantelfläche
- 68: Führungsringteil
- 69: Führungsbolzenteil
- 70: äußere O-Ring-Dichtung
- 71: innere Dichtungen
- 72: Rohrkolbenelementsitz
- 73: Anschlagsfläche
- 74: Durchgangsöffnung
- 75: Hohlraum
- 76: Druckausgleichskammer
- 77: weitere elektromagnetisch arbeitende Antriebeinheit
- 78: Außenbauteil
- 79: Innenbauteil
- 80: Durchgangsöffnung
- 81: weiterer Blasluftkanal
- 85: obere Anordnung
- 86: untere Anordnung
- 87: Winkel
- 90: Wandung
- 91: Absatz
- 92: äußere Umfangsfläche
- 93: Außendurchmesser
- 94: Permanentmagnetelement
- 95: plane Kopfseite
- 96: konturierte Kopfseite

- 100: alternative Anordnung
- 101: erstes Seitenteil
- 102: zweites Seitenteil
- 103: Verriegelungseinrichtung
- 104: Blasdüse
- 105: Blaskolben
- 106: Ventilblock
- 107: Längsrichtung
- 108: Antrieb

- L: Linie
- U: Umgebung
- X: Achse
- Y: Reckrichtung

## Patentansprüche

1. Umformvorrichtung (1) zum Umformen von Kunststoffvorformlingen (10) zu Kunststoffbehältnissen (10A) mit einer Vielzahl an Blasstationen (8) und mit wenigstens einer Steuereinrichtung (55; 55A; 55B; 55C) zum Steuern von Blasdrücken und/oder Volumenströmen an den Blasstationen (8), bei welcher die wenigstens eine Steuereinrichtung (55; 55A; 55B; 55C) mindestens ein Steuerventil (56) mit einem in einem Zylinderteil (57) geführten Steuerkolbenteil (58) umfasst, mittels welchem ein Blasluftkanalquerschnitt (59) eines Blasluftkanals (60) verschließbar ist,
**dadurch gekennzeichnet, dass**
die Steuereinrichtung (55; 55A; 55B; 55C) eine elektromagnetisch arbeitende Antriebeinheit (61; 77) aufweist, um eine Lageveränderung des Steuerkolbenteils (58) innerhalb des Zylinderteils (57) zu bewirken und damit auch die Blasdrücke und/oder Volumenströme an den Blasstationen (8) zu steuern, die elektromagnetisch arbeitende Antriebeinheit (61; 77) eine Mess- und Detektiereinheit umfasst, mittels welcher die Lageposition des Steuerkolbenteils (58) und/oder die Lageveränderung des Steuerkolbenteils (58) ermittelbar sind.

2. Umformvorrichtung (1) nach Anspruch 1,
**dadurch gekennzeichnet, dass**
die elektromagnetisch arbeitende Antriebeinheit (61; 77) gegenüber dem Steuerkolbenteil (58) derart angeordnet ist, dass durch diese elektromagnetisch arbeitende Antriebeinheit (61; 77) eine variable Hubweglänge (63) des Steuerkolbenteils (58) erzeugbar ist.

3. Umformvorrichtung (1) nach zumindest einem der vorhergehenden Ansprüche,
**dadurch gekennzeichnet, dass**
das Steuerkolbenteil (58) wenigstens ein Rohrkolbenelement (58A) umfasst, welches innerhalb eines Statorwicklungsteils (65) der elektromagnetisch arbeitenden Antriebeinheit (61; 77) axial verschieblich gelagert angeordnet ist.

4. Umformvorrichtung (1) nach zumindest einem der vorhergehenden Ansprüche,
**dadurch gekennzeichnet, dass**
das Rohrkolbenelement (58A) ein Läuferwicklungsteil (66) umfasst, welches die Mantelfläche (67) des Steuerkolbenteils (58) zumindest teilweise ausgestaltet.

5. Umformvorrichtung (1) nach zumindest einem der vorhergehenden Ansprüche,
**dadurch gekennzeichnet, dass**
das Steuerkolbenteil (58) an einem in ein Rohrkolbenelement (58A) hineinragenden Führungsbolzenteil (69) des Zylinderteils (57) axial verschieblich gelagert ist.

6. Umformvorrichtung (1) nach zumindest einem der vorhergehenden Ansprüche,
**dadurch gekennzeichnet, dass**
das Steuerkolbenteil (58) eine Druckausgleichskammer (76) aufweist.

7. Umformvorrichtung (1) nach zumindest einem der vorhergehenden Ansprüche,
**dadurch gekennzeichnet, dass**
das Steuerkolbenteil (58) zwei Rohrkolbenelemente (58A, 58B) umfasst, wobei eines der beiden Rohrkolbenelemente (58A, 58B) axial verschieblich in dem anderen der beiden Rohrkolbenelemente (58A, 58B) angeordnet ist.

8. Umformvorrichtung (1) nach zumindest einem der vorhergehenden Ansprüche,
**dadurch gekennzeichnet, dass**
gegenüber Kolbenteile (58) dichtend wirkende Dichtflächen aus einem weicheren oder härteren Werkstoff als die Kolbenteile (58) ausgeführt sind.

9. Umformvorrichtung (1) nach zumindest einem der vorhergehenden Ansprüche,
**dadurch gekennzeichnet, dass**
mittels der Steuereinrichtung (55; 55A; 55B; 55C) mehrere Steuerventile (56) zumindest einer der Blasstationen (8) steuerbar sind.

10. Umformvorrichtung nach zumindest einem der vorhergehenden Ansprüche,
**gekennzeichnet durch**
eine zentrale Controllereinheit, mittels welcher mehrere Steuereinrichtungen (55; 55A; 55B; 55C) steuerbar sind.

11. Umformvorrichtung nach zumindest einem der vorhergehenden Ansprüche,
**dadurch gekennzeichnet, dass**
die Steuereinrichtung (55; 55A; 55B; 55C) einen Energiespeicher zum Speichern von elektrischer Energie umfasst.

## Claims

1. A shaping apparatus (1) for the shaping of plastics material preforms (10) into plastics material containers (10A) with a plurality of blow moulding stations (8) and with at least one control device (55; 55A; 55B; 55C) for the control of blow moulding pressures and/or volume flows at the blow moulding stations (8), in which the at least one control device (55; 55A; 55B; 55C) comprises at least one control valve (56) with a control piston part (58) which is guided in a cylinder part (57) and by means of which a cross-section (59) of a blow moulding air duct (60) is capable of being closed,
**characterized in that**
the control device (55; 55A; 55B; 55C) has a drive unit (61; 77) operating in an electromagnetic manner in order to effect a change in position of the control piston part (58) inside the cylinder part (57) and thus also to control the blow moulding pressures and/or volume flows at the blow moulding stations (8), and the drive unit (61; 77) operating in an electromagnetic manner comprises a measurement and detection unit by means of which the position of the control piston part (58) and/or the change in position of the control piston part (58) is or are capable of being determined.

2. A shaping apparatus (1) according to claim 1,
**characterized in that**
the drive unit (61; 77) operating in an electromagnetic manner is arranged with respect to the control piston part (58) in such a way that a variable stroke path length (63) of the control piston part (58) is capable of being produced by this drive unit (61; 77) operating in an electromagnetic manner.

3. A shaping apparatus (1) according to at least one of the preceding claims,
**characterized in that**
the control piston part (58) comprises at least one tube piston element (58A) which is arranged so as to be mounted in an axially displaceable manner inside a stator winding part (65) of the drive unit (61; 77) operating in an electromagnetic manner.

4. A shaping apparatus (1) according to at least one of the preceding claims,
**characterized in that**
the tube piston element (58A) comprises a rotor winding part (66) which forms the peripheral face (67) of the control piston part (58) at least in part.

5. A shaping apparatus (1) according to at least one of the preceding claims,
**characterized in that**
the control piston part (58) is mounted so as to be axially displaceable on a guide bolt part (69) of the cylinder part (57) projecting into a tube piston element (58A).

6. A shaping apparatus (1) according to at least one of the preceding claims,
**characterized in that**
the control piston part (58) has a pressure equalization chamber (76).

7. A shaping apparatus (1) according to at least one of the preceding claims,
**characterized in that**
the control piston part (58) comprises two tube piston elements (58A, 58B), wherein one of the two tube piston elements (58A, 58B) is arranged so as to be axially displaceable in the other of the two tube piston elements (58A, 58B).

8. A shaping apparatus (1) according to at least one of the preceding claims,
**characterized in that**
sealing faces acting in a sealing manner with respect to piston parts (58) are produced from a softer or harder material than the piston parts (58).

9. A shaping apparatus (1) according to at least one of the preceding claims,
**characterized in that**
a plurality of control valves (56) of at least one of the blow moulding stations (8) are capable of being controlled by means of the control device (55; 55A; 55B; 55C).

10. A shaping apparatus according to at least one of the preceding claims, **characterized by**
a central controller unit, by means of which a plurality of control devices (55; 55A; 55B; 55C) are capable of being controlled.

11. A shaping apparatus according to at least one of the preceding claims, **characterized in that**
the control device (55; 55A; 55B; 55C) comprises an energy storage device for storing electrical energy.

## Revendications

1. Dispositif de transformation (1) destiné à transformer des ébauches en matière plastique (10) en contenants en matière plastique (10A), comprenant une pluralité de stations de soufflage (8) et au moins un système de commande (55 ; 55A ; 55B ; 55C) pour la commande de pressions de soufflage et/ou de débits volumiques au niveau des stations de soufflage (8), dans lequel le ou les systèmes de commande (55 ; 55A ; 55B ; 55C) comportent au moins une soupape de commande (56) pourvue d'une partie piston de commande (58) qui est guidée dans une partie cylindrique (57) et au moyen de laquelle une section de conduit d'air de soufflage (59) d'un conduit d'air de soufflage (60) peut être fermée,
**caractérisé en ce que**
le système de commande (55 ; 55A ; 55B ; 55C) comprend une unité d'entraînement (61 ; 77) à fonctionnement électromagnétique, afin d'entraîner une modification de la position de la partie piston de commande (58) à l'intérieur de la partie cylindrique (57) et donc également de commander les pressions de soufflage et/ou les débits volumiques au niveau des stations de soufflage (8), l'unité d'entraînement (61 ; 77) à fonctionnement électromagnétique comportant une unité de mesure et de détection, au moyen de laquelle la position de la partie piston de commande (58) et/ou la modification de la position de la partie piston de commande (58) peuvent être déterminées.

2. Dispositif de transformation (1) selon la revendication 1,
**caractérisé en ce que**
l'unité d'entraînement (61 ; 77) à fonctionnement électromagnétique est agencée vis-à-vis de la partie piston de commande (58) de telle manière que cette unité d'entraînement (61 ; 77) à fonctionnement électromagnétique peut produire une longueur de course (63) variable de la partie piston de commande (58).

3. Dispositif de transformation (1) selon au moins l'une des revendications précédentes,
**caractérisé en ce que**
la partie piston de commande (58) comporte au moins un élément piston tubulaire (58A), lequel est monté de manière à pouvoir être déplacé axialement à l'intérieur d'une partie enroulement de stator (65) de l'unité d'entraînement (61 ; 77) à fonctionnement électromagnétique.

4. Dispositif de transformation (1) selon au moins l'une des revendications précédentes,
**caractérisé en ce que**
l'élément piston tubulaire (58A) comporte une partie enroulement de rotor (68), laquelle formant au moins en partie la surface extérieure (67) de la partie piston de commande (58).

5. Dispositif de transformation (1) selon au moins l'une des revendications précédentes,
**caractérisé en ce que**
la partie piston de commande (58) est montée mobile axialement sur une partie tige de guidage (69), faisant saillie dans un élément piston tubulaire (58A), de la partie cylindrique (57).

6. Dispositif de transformation (1) selon au moins l'une des revendications précédentes,
**caractérisé en ce que**
la partie piston de commande (58) comprend une chambre de compensation de pression (76).

7. Dispositif de transformation (1) selon au moins l'une des revendications précédentes,
**caractérisé en ce que**
la partie piston de commande (58) comporte deux éléments piston tubulaire (58A, 58B), un des deux éléments piston tubulaire (58A, 58B) étant monté mobile axialement dans l'autre élément parmi les deux éléments piston tubulaire (58A, 58B).

8. Dispositif de transformation (1) selon au moins l'une des revendications précédentes,
**caractérisé en ce que**
des surfaces d'étanchéité assurant une étanchéité vis-à-vis des parties piston (58) sont réalisées à partir d'un matériau plus souple ou plus dur que celui des parties piston (58).

9. Dispositif de transformation (1) selon au moins l'une des revendications précédentes,
**caractérisé en ce que**
plusieurs soupapes de commande (56) d'au moins une des stations de soufflage (8) peuvent être commandées au moyen du système de commande (55 ; 55A ; 55B ; 55C).

10. Dispositif de transformation selon au moins l'une des revendications précédentes,
**caractérisé par**
une unité centrale de contrôle, au moyen de laquelle plusieurs systèmes de commande (55 ; 55A ; 55B ; 55C) peuvent être commandés.

11. Dispositif de transformation selon au moins l'une des revendications précédentes,
**caractérisé en ce que**
le système de commande (55 ; 55A ; 55B ; 55C) comporte un accumulateur d'énergie pour stocker de l'énergie électrique.
